(19) Europäisches Patentamt

European Patent Office

Office européen des brevets

(11) **EP 0 853 246 A2**

(12) **EUROPÄISCHE PATENTANMELDUNG**

(43) Veröffentlichungstag:
   **15.07.1998 Patentblatt 1998/29**

(51) Int. Cl.$^6$: **G02B 6/255**

(21) Anmeldenummer: **97122315.1**

(22) Anmeldetag: **17.12.1997**

(84) Benannte Vertragsstaaten:
   **AT BE CH DE DK ES FI FR GB GR IE IT LI LU MC NL PT SE**
   Benannte Erstreckungsstaaten:
   **AL LT LV MK RO SI**

(30) Priorität: **10.01.1997 DE 19700676**

(71) Anmelder:
   **SIEMENS AKTIENGESELLSCHAFT**
   **80333 München (DE)**

(72) Erfinder:
   • **Rügenberg, Gervin**
     **81377 München (DE)**
   • **Schmallegger, Hermann**
     **81379 München (DE)**
   • **Drobner, Franz**
     **81371 München (DE)**

(54) **Verfahren sowie Vorrichtung zum thermischen Verschweissen mindestens zweier Lichtleitfaserenden**

(57)   Je zwei einander zugeordnete Lichtleitfaserenden (FE1, FE2) werden stirnseitig durch thermische Erhitzung abgerundet und nach diesem Abrundvorgang für eine vorgebbare Zeitspanne (KZ) abgekühlt. Erst danach werden sie stirnseitig miteinander in Kontakt gebracht und thermisch verschweißt.

FIG 1

EP 0 853 246 A2

## Beschreibung

Die Erfindung betrifft ein Verfahren zum thermischen Verschweißen von mindestens je zwei einander zugeordneter Lichtleitfaserenden.

Aus der EP 0 320 978 A2 ist lediglich ein Meßverfahren zur quantitativen Bestimmung der Hitzemenge bekannt, mit der z.B. ein Lichtbogen auf optische Faserenden einwirkt. Dazu wird der Rückzugsweg der jeweiligen Faser gemessen, um den sich diese verkürzt, wenn sie sich unter der Hitzeeinwirkung endseitig abrundet.

Der Erfindung liegt die Aufgabe zugrunde, einen Weg aufzuzeigen, wie unter einer Vielzahl praktischer Gegebenheiten eine einwandfreie Schweißverbindung zwischen mindestens je zwei einander zugeordneten Lichtleitfaserenden hergestellt werden kann. Gemäß der Erfindung wird diese Aufgabe bei einem Verfahren der eingangs genannten Art dadurch gelöst, daß die jeweiligen beiden Lichtleitfaserenden in vorgebbarem Längsabstand voneinander positioniert werden, daß diese Lichtleitfaserenden jeweils stirnseitig durch thermische Erhitzung abgerundet werden, daß nach diesem Abrundungsvorgang die abgerundeten Lichtleitfaserenden jeweils für eine vorgebbare Zeitspanne abgekühlt werden, und daß erst danach in einem separaten Arbeitsschritt die abgekühlten Lichtleitfaserenden stirnseitig miteinander in Kontakt gebracht und thermisch verschweißt werden.

Dadurch, daß nach dem Abrunden der Lichtleitfaserenden mittels thermischer Erhitzung eine Abkühlphase für eine vorgebbare Zeitspanne folgt, kann der Abrundungsvorgang weitgehend unabhängig vom eigentlichen Schweißvorgang gemacht und durchgeführt werden. Durch diese zeitliche Abkopplung bzw. Trennung des Abrundungsvorgangs vom eigentlichen Schweißvorgang lassen sich sowohl zum Abrunden als auch zum Schweißen optimale Schweißparameter wie zum Beispiel Lichtbogen- Temperatur, Einwirkungszeit, usw. ... einstellen. Durch die eingeschobene Abkühlphase nach dem Abrunden der Lichtleitfaserenden sind dabei Überhitzungen der Lichtleitfaserenden bei deren nachfolgender, eigentlicher Verschweißung weitgehend vermieden.

Besonders bevorzugt beim Verschweißen von Mehrmodenfasern kann dadurch die Ausbildung von Gasblasen im aufgeschmolzenen Glasmaterial der je zwei miteinander zu verbindenden Lichtleitfaserenden weitgehend vermieden werden.

Die Erfindung betrifft weiterhin eine Vorrichtung zum thermischen Verschweißen von mindestens je zwei einander zugeordneter Lichtleitfaserenden, welche dadurch gekennzeichnet ist, daß Positioniermittel vorgesehen sind, mit denen sich die Lichtleitfaserenden in vorgebbarem Längsabstand voneinander positionieren lassen, und daß Schweißmittel mit einer zugehörigen Steuereinrichtung derart vorgesehen sind, daß sich die Lichtleitfaserenden stirnseitig durch thermische Erhitzung abrunden, danach für eine vorgebbare Zeitspanne abkühlen und erst nach dieser Abkühlung in einem separaten Arbeitsschritt stirnseitig miteinander in Kontakt bringen sowie thermisch verschweißen lassen.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:

Figur 1 schematisch in teilweise perspektivischer Darstellung den Grundaufbau einer Vorrichtung zur Durchführung des erfindungsgemäßen Verfahrens,

Figuren 2 mit 8 in schematischer sowie vergrößerter Darstellung die zeitliche Abfolge von einzelnen Schritten des erfindungsgemäßen Verfahrens,

Figur 9 in schematischer sowie vergrößerter Darstellung eine durch Blasenbildung mißlungene Schweißverbindung bei konventioneller Verschweißung zweier Lichtleitfaserenden,

Figur 10 in schematischer sowie vergrößerter Darstellung zwei miteinander zu verschweißende Lichtleitfasern, deren Stirnflächen ungeglättet Inhomogenitäten aufweisen, und

Figur 11 in schematischer Darstellung ein Schweißstrom/Zeit-Diagramm zur Steuerung des Glimmentladungs-Lichtbogens der Vorrichtung nach Figur 1 zur Durchführung des erfindungsgemäßen Verfahrens.

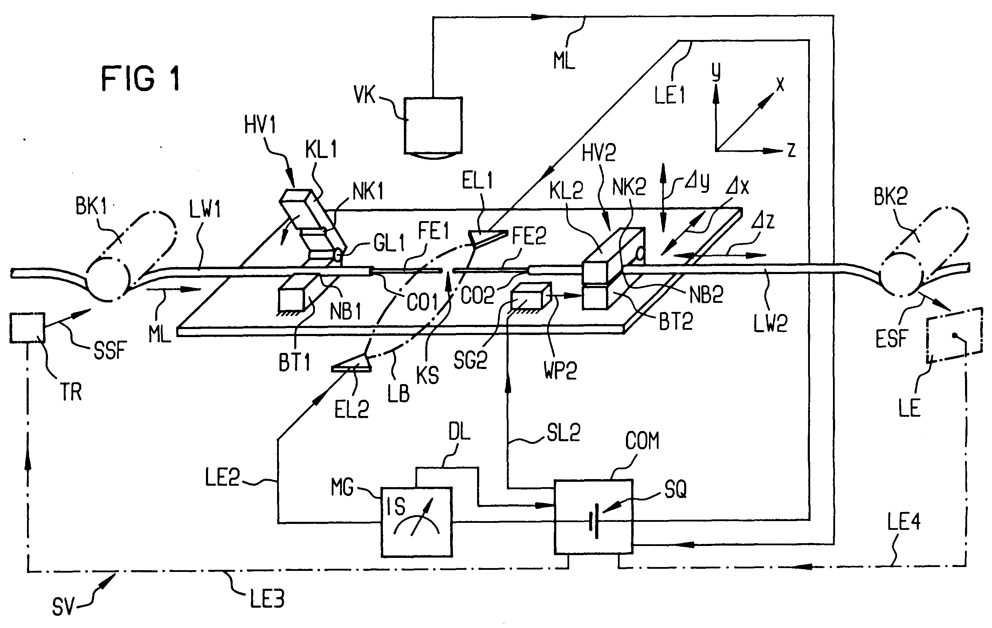

Elemente mit gleicher Funktion und Wirkungsweise sind in den Figuren 1 mit 11 jeweils mit den gleichen Bezugszeichen versehen.

Figur 1 zeigt schematisch in teilweise perspektivischer Darstellung den Grundaufbau einer Schweißvorrichtung SV, die insbesondere Bestandteil eines Lichtwellenleiter-Spleißgerätes ist. In die Schweißvorrichtung SV sind zwei Lichtwellenleiter LW1, LW2 eingelegt. Sie werden in zugeordneten Haltevorrichtungen HV1 bzw. HV2 (wie zum Beispiel Manipulatoren) bekannter Bauart gehalten und lagefixiert. Zur besseren Veranschaulichung der Fixierwirkung der ersten Haltevorrichtung HV1 ist diese in der linken Bildhälfte von Figur 1 beispielhaft in geöffnetem Zustand gezeichnet. Sie weist ein Basisteil BT1 auf, auf dessen Oberseite eine Längsnut NB1 eingelassen ist, in die der erste, gecoatete (= kunststoffbeschichtete) Lichtwellenleiter LW1 eingelegt ist. Am Basisteil BT1 ist über ein Gelenk GL1, Scharnier oder dergleichen ein Deckel bzw. eine Klappe KL1 angebracht, die in Richtung auf das Basisteil BT1 zu schwenkbar ist. Auf der Innenseite des Deckels KL1 ist eine Längsnut NK1 korrespondierend zur Längsnut NB1 im Basisteil BT1 vorgesehen. Nach Schließen der Haltevorrichtung HV1 wird somit der erste Lichtwellenleiter LW1 zwischen dem Basisteil BT1 und dem Deckel KL1 eingeklemmt und dort festgehalten. Analog dazu fixiert die Haltevorrichtung HV2 den zweiten, gecoateten Lichtwellenleiter LW2. Figur 1 zeigt die Haltevorrichtung HV2 in der rechten Bildhälfte im geschlossenen Zustand, bei dem der gecoatete Lichtwellenleiter LW2 zwischen dem Basisteil BT2 und dem Deckel KL2 der Haltevorrichtung HV2 eingeklemmt ist und dadurch festgehalten wird. Der Deckel KL2 ist dabei mit Hilfe eines Gelenks bzw. Scharniers, d.h. Schwenkmechanismus, GL2 am Basisteil BT2 schwenkbar angebracht. Zur Lagefixierung des Lichtwellenleiters LW2 ist auf der Oberseite des Basisteils BT2 eine Längsnut NB2 sowie korrespondierend dazu auf der Unterseite des Deckels KL2 eine Längsnut NK2 eingelassen.

Die Kunststoff-Beschichtung CO1 bzw. CO2 (= primäres und/oder sekundäres Coating) des jeweiligen Lichtwellenleiters LW1 bzw. LW2 ist entlang eines vorgebbaren Endabschnitts entfernt bzw. abgesetzt, so daß dort jeweils blanke Faserenden FE1, FE2 freiliegen. Der erste sowie der zweite Lichtwellenleiter LW1, LW2 stehen sich zunächst mit ihren stirnseitigen Enden in einem vorgebbaren Längsabstand gegenüber. Der jeweilige Lichtwellenleiter LW1 bzw. LW2 erstreckt sich dabei vorzugsweise im wesentlichen entlang einer Geradenlinie in z- Richtung.

Die beiden Haltevorrichtungen HV1, HV2 sind auf einer gemeinsamen Grundplatte GP angeordnet. Dabei ist mindestens eine der beiden Haltevorrichtungen HV1 bzw. HV2, hier im vorliegenden Beispiel HV2, in mindestens eine Raumrichtung, insbesondere quer, bevorzugt lateral zur jeweiligen Faserlängsachse verschiebbar ausgebildet. Im vorliegenden Beispiel ist angenommen, daß die zweite Haltevorrichtung HV2 eine Bewegung in alle drei Raumrichtungen, nämlich x, y, z eines kartesischen Koordinatensystems zuläßt. Die Raumrichtung z gibt dabei eine Längsrichtung, das heißt gewünschte Ausrichtlinie vor, entlang der jedes der beiden Faserenden FE1, FE2 ausgerichtet werden soll. Die Raumrichtung x verläuft in Querrichtung zur Längserstreckung der beiden Lichtwellenleiter LW1, LW2, insbesondere senkrecht, das heißt orthogonal zur Raumrichtung z. Die plane Grundplatte GP liegt dabei insbesondere parallel zu der von der x sowie z-Raumrichtung aufgespannten Ebene. Die Raumrichtung y steht senkrecht zu dieser x,z-Ebene, das heißt sie verläuft nach oben oder unten. Die Verschiebbarkeit der zweiten Haltevorrichtung HV2 in die entsprechende Raumrichtung x, y oder z wird mit Hilfe eines Stellgliedes SG2 vorgenommen, das seine Steuersignale von einer Auswerte-/Steuereinrichtung COM über eine Steuerleitung SL2 erhält. Die Verschiebewirkung des Stellgliedes SG2 auf die zugeordnete Haltevorrichtung HV2 ist in der Figur 1 mit Hilfe eines Wirkpfeils WP2, die Verschiebbarkeit der Haltevorrichtung HV2 in die x,y,z-Richtung jeweils durch Doppelpfeile $\Delta x, \Delta y, \Delta z$ schematisch angedeutet.

Um den jeweils aktuellen, vorzugsweise radialen Lageversatz der beiden Lichtleitfaserenden FE1, FE2 zueinander, das heißt deren momentanen Ausrichtzustand aufeinander erfassen zu können, werden, vorzugsweise deren Außenkonturen mit Hilfe eines optischen Abbildungssystems bzw. Bildverarbeitungssystems VK, insbesondere einer Video-Kamera, beobachtet und fortlaufend aufgenommen. Das Bildverarbeitungssystem ist in der Figur 1 oberhalb der Grundplatte GP angeordnet und dem Bereich KS der sich mit Längsabstand gegenüberstehenden Faserenden FE1, FE2 zugeordnet. Insbesondere eignet sich dafür ein Bildverarbeitungssystem, wie es in der US-PS 5,011,259 angegeben ist. Das optische Abbildungssystem VK ist über eine Meßleitung ML mit der Auswerte-/Steuereinrichtung COM verbunden, um dort die von ihm aufgenommenen Bildinformationen auswerten zu können.

Gegebenenfalls kann es auch zweckmäßig sein, den aktuellen Ausrichtzustand der beiden Lichtleitfaserenden FE1, FE2 aufeinander mit Hilfe anderer Meßmittel zu erfassen. In der Figur 1 sind die Komponenten(wie zum Beispiel BK1, BK2, TR, LE, LE3, LE4) eines solchen zusätzlichen oder alternativen Systems für die Bestimmung des radialen Versatzes der beiden Lichtleitfasern FE1, FE2 gegeneinander strichpunktiert mit eingezeichnet. Es weist einen optischen Sender TR, insbesondere eine Laserdiode, auf, der mit Hilfe eines zylindrisch angedeuteten Biegekopplers BK1 an den ersten Lichtwellenleiter LW1 angekoppelt ist. Der Biegekoppler BK1 ist dabei in der Figur 1 (bei Blickrichtung von links nach rechts) vor der Haltevorrichtung HV1 angeordnet. Anteile des Sende-Strahlungsfeldes SSF des optischen Senders TR werden sendeseitig (, hier in der Figur 1 in der linken Bildhälfte) in den ersten Lichtwellenleiter LW1 unter Zuhilfenahme dieses Biegekopplers BK1 in Richtung auf den freigelegten Lichtleitfaserabschnitt FE1 eingekoppelt. Die Ansteuerung des optischen Senders TR kann von der Auswerte-/Steuereinrichtung COM über eine Steuerleitung LE3 erfolgen. Auf diese Weise durchläuft in der Figur 1 ein Meßlicht ML den freiliegenden Endabschnitt der Lichtleitfaser FE1 und wird in den gegenüberstehenden Lichtleitfaser- Endabschnitt FE2 übergekoppelt. Anteile dieses Meßlichts ML können deshalb nach Durchlaufen des Lichtleitfaserabschnitts FE2 empfangsseitig mit Hilfe eines zweiten Biegekopplers BK2 ausgekoppelt werden, der in der rechten Bildhälfte von Figur 1 nach der zweiten Haltevorrichtung HV2 am zweiten Lichtwellenleiter LW2 angekoppelt ist. Das Empfangsstrahlungsfeld ESF dieser empfangsseitig ausgekoppelten Meßlichtanteile wird in der Figur 1 mit Hilfe eines lichtempfindlichen Elements LE, insbesondere einer Fotodiode, erfaßt und über eine Meßleitung LE4 an die Auswerte-/Steuereinrichtung COM zur Auswertung weitergeleitet. Auf diese Weise ist es ermöglicht, Veränderungen des über die beiden Lichtleitfaserenden FE1, FE2 geschickten Meßlichts ML zu bestimmen und diese Veränderungen als Maß für einen etwaigen radialen Versatz der beiden Lichtleitfaserenden FE1, FE2 (bezogen auf deren gemeinsamer Fluchtlinie in z- Richtung) gegeneinander heranzuziehen. Insbesondere kann es dabei zweckmäßig sein, die Dämpfung des über die beiden Lichtleitfaserenden FE1, FE2 transmittierten, das heißt übergekoppelten Meßlichts ML mit Hilfe der in der US-PS 5,078,489 beschriebenen Meßmethode („LID-Verfahren" = „Light Injection and Detection") zu bestimmen. Je nach Grad des radialen Versatzes der beiden Lichtleitfaserenden FE1, FE2 gegeneinander, wird eine Dämpfungserhöhung bei der Lichtüberkopplung bzw. Lichtübertragung verursacht. Je größer der radiale Versatz der beiden Lichtleitfaserenden FE1, FE2 gegeneinander wird, desto größer wird auch die Dämpfung, so daß eine eindeutige Zuordnung zwischen der zeitlichen Aufnahme des Dämpfungsverlaufs und dem Grad des radialen Lageversatzes der beiden Lichtleitfaserenden FE1, FE2 gegeneinander möglich ist.

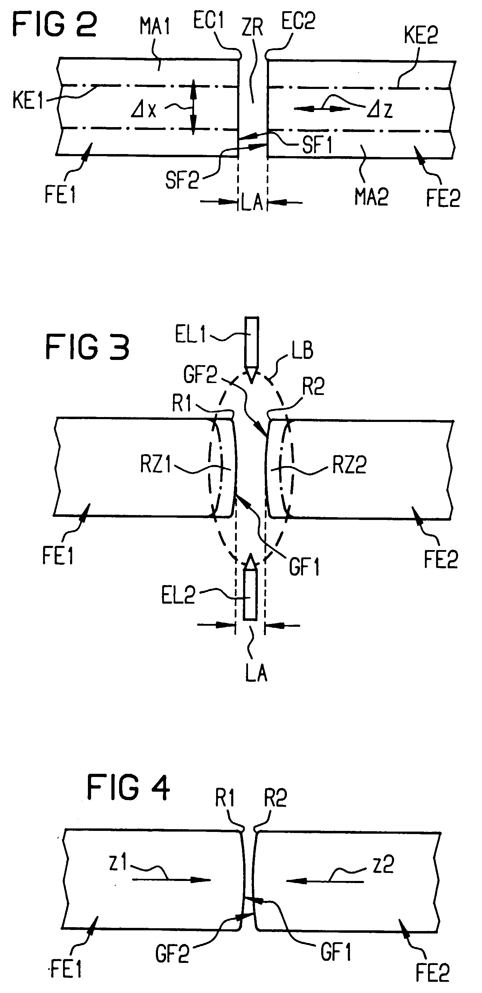

Die Figuren 2 mit 10 zeigen jeweils schematisch sowie vergrößert die Außenkonturen der beiden Lichtleitfasern FE1, FE2 im Bereich ihrer Stirnseiten in einer gemeinsamen Lageebene wie zum Beispiel der x,z-Ebene von Figur 1. Die Außenkonturen der Lichtleitfasern FE1, FE2 werden insbesondere mit dem Abbildungssystem VK von Figur 1 als langgestreckte, etwa reckteckförmige Streifen beobachtet, aufgenommen und registriert. Zur besseren Veranschaulichung des inneren Aufbaus der jeweiligen Lichtleitfaser FE1, FE2 ist in der Figur 2 zusätzlich der Verlauf deren zugehörigen Faserkerns (core) KE1 bzw. KE2 strichpunktiert mit eingezeichnet. Der Faserkern (core) KE1 bzw. KE2 verläuft jeweils zentrisch im Inneren des Glasmantels (cladding) MA1 bzw. MA2 der jeweiligen Lichtleitfaser FE1 bzw. FE2. Räumlich betrachtet heißt das, daß die jeweilige Lichtleitfaser FE1 bzw. FE2 einen im wesentlichen kreiszylinderförmigen Faserkern KE1 bzw. KE2 in ihrem Zentrum aufweist, auf dem der Glasmantel (= Mantelglas) MA1 bzw. MA2 als kreiszylinderförmige Beschichtung aufsitzt. Bei Verwendung von Mehrmodenfasern liegt deren Faserkerndurchmesser typischerweise insbesondere bei etwa 100 μm, deren Mantelglas-Außendurchmesser insbesondere bei etwa 140 μm.

Zweckmäßig kann es sein, zunächst die Lichtleitfaserenden FE1, FE2 mit Hilfe der Positioniervorrichtungen wie zum Beispiel HV1, HV2, SG2 der Schweißvorrichtung SV von Figur 1 bezüglich ihrer Außenkonturen möglichst fluchtend aufeinander auszurichten, das heißt einen etwaigen radialen Versatz der Außenkonturen der Lichtleitfaserenden FE1, FE2 möglichst zu Null zu machen. Diese Ausrichtbewegung quer, insbesondere senkrecht, zur jeweiligen Faserlängsachse ist in der Figur 2 beispielhaft für die x-Richtung mit Hilfe des Doppelpfeils Δx angedeutet. Die laterale Ausrichtung bezüglich der Faser-Außenkonturen kann insbesondere bei Mehrmodenfasern ausreichend sein, da deren Licht leitender Faserkerndurchmesser wesentlich größer als der Kerndurchmesser von Monomodefasern ist. Gegebenenfalls kann die laterale Ausrichtung auch derart erfolgen, daß die Faserkerne möglichst fluchtend aufeinander angeordnet werden. Dies ist vorzugsweise für Monomodefasern zweckmäßig, deren Faserkern- Außendurchmesser jeweils typischerweise bei lediglich etwa 10 μm sowie deren Mantelglas-Außendurchmesser bei etwa 125 μm liegt.

Nach diesem queraxialen, insbesondere radialen Ausrichtvorgang werden die Faserenden FE1, FE2 in vorgebbarem Längsabstand LA voneinander positioniert. Die Stirnflächen SF1, SF2 der Lichtleitfasern FE1, FE2 stehen sich also mit einem definierten Längsabstand LA gegenüber, so daß eine Lücke bzw. ein Zwischenraum ZR gewünschter Spaltbreite zwischen den beiden Stirnflächen SF1, SF2 verbleibt. Die Einstellung des Längsabstandes LA kann gegebenenfalls auch zeitlich vor dem radialen Ausrichten der Faserenden FE1, FE2 durchgeführt werden. Die Einstellung des Längsabstandes LA zwischen den Stirnflächen SF1, SF2 der beiden, in radialer Richtung aufeinander ausgerichteten Lichtleitfaserenden FE1, FE2 ist in der Figur 2 mit Hilfe eines Doppelpfeils Δz angedeutet.

Die beiden Lichtleitfaserenden FE1, FE2 sind vorzugsweise derart vorpräpariert, daß ihre Stirnflächen SF1, SF2 jeweils im wesentlichen als 90°-Bruchflächen (bezogen auf die jeweilige Faser-Zentralachse) ausgebildet sind. Das jeweilige Faserende FE1 bzw. FE2 weist also eine annäherungsweise rechtwinklige, spitze Abbruchkante EC1 bzw. EC2 zwischen der - räumlich betrachtet- etwa kreiszylinderförmigen Außenkontur seines Glasmantels MA1 bzw. MA2 und seiner eigentlichen, - räumlich betrachtet- etwa kreisflächenförmigen Stirnfläche SF1, SF2 auf.

Nach dem Positionieren, das heißt radialen Ausrichten und Einstellen des Längsabstandes der beiden Faserenden FE1, FE2, werden die Lichtleitfaserenden FE1, FE2 in einem nachfolgenden, separaten Wärmebehandlungsvorgang stirnseitig durch thermische Erhitzung abgerundet. Dazu werden die vorab in gewünschter Weise positionierten Lichtleitfasern FE1, FE2 mit Hilfe einer Heizeinrichtung, insbesondere thermischen Wärmequelle wie zum Beispiel einem Glimmentladungs-Lichtbogen, im Bereich ihrer Stirnflächen erwärmt, insbesondere angeschmolzen, d.h mindestens auf Schmelztemperatur gebracht. Als Wärmequelle kann gegebenenfalls auch eine Gasflamme, Laser oder dergleichen verwendet werden.

Bei der Schweißvorrichtung SV von Figur 1 sind dem Zwischenraum zwischen den beiden Haltevorrichtungen HV1, HV2 zwei Schweißelektroden EL1, EL2 derart zugeordnet, daß sich zwischen ihnen durch Glimmentladungen ein Lichtbogen queraxial, insbesondere senkrecht zur axialen Längserstreckung der beiden Lichtleitfasern FE1, FE2 ausbilden kann. Der Verlauf des Bereichs, in dem sich jeweils ein Lichtbogen zwischen den beiden Elektroden EL1, EL2 ausbreiten kann (= Erwärmungs- bzw. Schweißbereich), ist in der Figur 1 der zeichnerischen Einfachheit halber lediglich in Form einer langgestreckten, gestrichelten Ellipse angedeutet und mit LB bezeichnet. Während die Elektrode EL1 der einen Längsseite der beiden Lichtleitfasern FE1, FE2 zugeordnet ist, befindet sich die Elektrode EL2 auf der der Schweißelektrode EL1 gegenüberliegenden Längsseite der Lichtleitfasern FE1, FE2. Insbesondere liegt die Schweißelektrode EL1 der Schweißelektrode EL2 um etwa 180° versetzt gegenüber. Die jeweilige Schweißelektrode EL1 bzw. EL2 ist über eine zugehörige Stromleitung LE1, LE2 an eine Spannungsquelle SQ angeschlossen, die vorzugsweise Bestandteil der Auswerte-/Steuereinrichtung COM ist. Die Spannungsquelle SQ ist in der Figur 1 der zeichnerischen Einfachheit halber lediglich symbolisch angedeutet. In die Stromleitung LE2 ist ein Strommeßgerät MG eingefügt, das die Entladestromstärke IS der Glimmentladungen zwischen den beiden Elektroden EL1, EL2 mißt und anzeigt. Das Meßgerät MG ist dabei über eine Datenleitung DL mit der Auswerte-/Steuereinrichtung COM verbunden, so daß dort die gemessenen Entladestromstärken der Glimmentladungen sowie deren zugehörige Entladezeiten zur Auswertung bereitgestellt sind. Gegebenenfalls kann dazu das Meßgerät in die Auswerte-/Steuereinrichtung COM integriert sein. Während dieser Wärmebehandlung zur Abrundung der Faserenden bleiben die optischen Fasern vorzugsweise ortsfest positioniert.

Vorzugsweise werden die beiden, jeweilig einander zugeordneten Lichtleitfaserenden FE1, FE2 beim Abrundungsvorgang in einem Längsabstand LA zwischen 3 μm und 1 mm voneinander positioniert.

Figur 3 veranschaulicht in schematischer sowie vergrößerter Darstellung den Abrundungsvorgang der beiden Faserenden FE1, FE2 im Bereich deren Stirnflächen. Die Außenkontur des Glasmantels MA1 bzw. MA2 der jeweiligen Lichtleitfaser FE1 FE2 kann dabei vorzugsweise mit Hilfe des BildverarbeitungsSystems VK von Figur 1 beobachtet bzw. erfaßt und aufgezeichnet werden. Die Figur 3 gibt beispielhaft die Abbildungsverhältnisse in der x,z-Bildebene bei Blickrichtung in y-Richtung wieder. Beidseitig der Längserstreckung der beiden Lichtleitfasern FE1, FE2 sind die beiden Elektroden EL1, EL2 dem Spaltraum zwischen den Stirnflächen der beiden Faserenden FE1, FE2 zugeordnet. Zwischen den beiden Elektroden EL1, EL2 bildet sich der gestrichelt gezeichnete Lichtbogen LB aus, der beide Lichtleitfaserenden FE1, FE2 gleichzeitig, d.h. gemeinsam, jeweils im Bereich ihrer Stirnflächen erfaßt. Durch den Glimmentladungs-Lichtbogen LB wird das Glasmaterial des jeweiligen Faserendes FE1 bzw. FE2 in einer stirnseitigen Randzone R1 bzw. R2 erwärmt und aufgeschmolzen, die in der Figur 3 jeweils strichpunktiert angedeutet ist. Durch die Oberflächenspannung des dort zähflüssig gemachten, geschmolzenen Glasmaterials kommt es zu einer Abrundung und damit Glättung des jeweiligen Faserendes. Insbesondere wird durch den Glasfluß die ursprünglich rechteckige, treppenstufenförmige, d.h. unstetige Abbruchkante EC1, EC2 (siehe Figur 2) zwischen der jeweiligen Stirnfläche SF1 bzw. SF2 und der Außenkontur des Glasmantels MA1 bzw. MA2 gerundet. Dabei zieht sich das Faser-Glasmaterial im Eckbereich gegenüber seiner ursprünglichen Ortslage von Figur 2 etwas zurück. Auch etwaige Kratzer, Unebenheiten, Aufrauhungen sowie sonstige Inhomogenitäten der Stirnflächen selbst lassen sich durch diese Wärmebehandlung weitgehend begradigen, d.h. einebnen, so daß eine homogene, glatte Außenoberfläche der jeweiligen Stirnfläche bereitgestellt werden kann. In der Figur 3 ist der abgerundete Übergang zwischen der Stirhfläche und der Außenkontur des Mantelglases der jeweiligen Lichtleitfaser mit R1, R2 bezeichnet. Die geglätteten Stirnflächen der entgrateten Lichtleitfaserenden FE1, FE2 sind mit den Bezugszeichen GF1 bzw. GF2 versehen. Zweckmäßigerweise werden die ursprünglich etwa rechtwinkligen Abbruchkanten zwischen der Außenkontur des Glasmantels und der Stirnfläche der jeweiligen Lichtleitfaser derart geglättet, daß sich für den abgerundeten Übergang R1 bzw. R2 ein Krümmungsradius vorzugsweise zwischen 1 und 50 μm, insbesondere zwischen 2 und 20 μm ergibt.

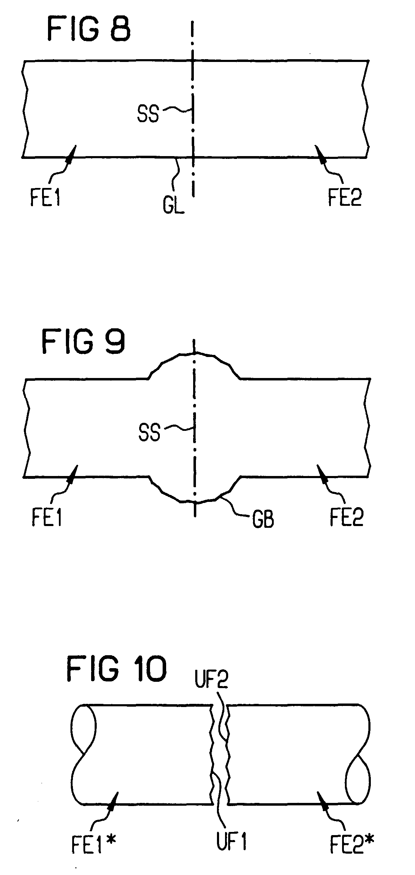

Figur 10 zeigt demgegenüber in schematischer sowie vergrößerter Darstellung Faserenden FE1*, FE2*, deren Stirnflächen keinem solchen thermischen Abrundungsvorgang unterworfen wurden. Solche unbehandelten Stirhflächen UF1, UF2 können ggf. mikroskopisch kleine Unebenheiten wie z.B. Wellungen, Kratzer, Zacken, usw. oder sonstige Aufrauhungen aufweisen. Derartige Inhomogenitäten auf der Stirhfläche der jeweiligen Lichtleitfaser können zum Beispiel von deren mechanischer Vorpräparation herrühren, bei der ein endseitiges Teilstück der jeweiligen Lichtleitfaser abgeschnitten bzw. abgetrennt und die Kunststoffbeschichtung (coating) dieser endseitig „frisch angeschnittenen" Lichtleitfaser auf einer Teillänge abgesetzt wird. Würden Faserenden mit Stirnflächen rauher Außenoberfläche miteinander kontaktiert werden, so würden zwischen ihnen mikroskopisch kleine, gas- , insbesondere luftgefüllte Zwischenräume eingeschlossen werden. Beim Verschmelzen dieser ungeglätteten Stirnflächen könnte es unter der Hitzeeinwirkung zu einer Expansion solcher Gaseinschlüsse kommen, wodurch Glasmaterial nach außen transportiert und die definiert einzuhaltende Lichtleitfaserstruktur von Faserkern und Mantelglas in unzulässiger Weise verändert werden würde. Es bestände durch diese Kavitation (Hohlraumausbildung) die Gefahr einer Gasblasenbildung, durch die im Bereich der Schweißverbindungsstelle Glasmaterial der beiden Lichtleitfaserenden angehäuft werden und zu einer Aufdickungsstelle führen würde. Figur 9 zeigt eine solche durch Gasblasenbildung mißlungene Schweißverbindung GB in schematischer sowie vergrößerter Darstellung. Diese Problematik der Gasblasenbildung wurde in Tests insbesondere bei der Verschweißung von Mehrmodenfasern beobachtet. Dabei scheint das Aufblähen einer solchen Gasblase vom dotierten Faserkern der jeweiligen Mehrmodenfaser herzurühren, der gegenüber dem Faserkern einer Monomodefaser einen wesentlich größeren Durchmesser aufweist.

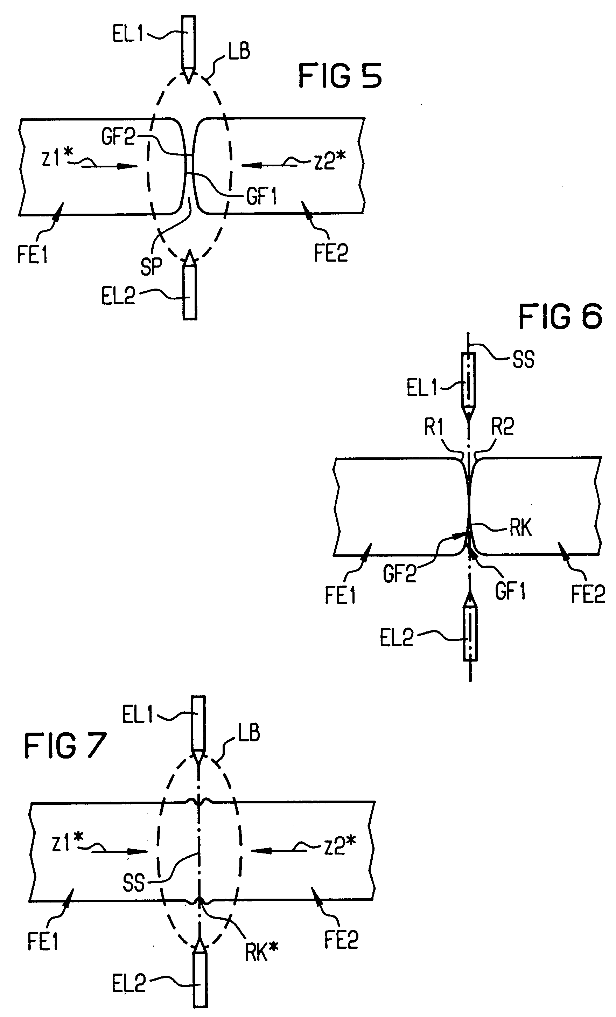

In Tests wurde erfolgreich nachgewiesen, daß sich hingegen durch das Abrunden und Glätten der Faserstirnflächen mittels Wärmebehandlung die Tendenz zu dieser Ausbildung von Gasblasen im aufgeschmolzenen Glasmaterial beim späteren, eigentlichen Verschweißen der Lichtleitfaserenden, insbesondere denen von Mehrmodenfasern, verringern läßt. Durch das Glätten der Stirnflächen werden nämlich Gaseinschlüsse beim späteren Kontaktieren und Verschweißen der Stirnflächen weitgehend vermieden (siehe Figur 6). Dabei verbleibt zwischen den sich lediglich im Zentralbereich kontaktierenden Faserstirnflächen GF1, GF2 durch die Abrundung der Abbruchkanten eine Randkluft bzw. ein Randspalt RK (siehe Figur 6) nach außen offen, durch den beim Verschweißen etwaig aus dem Glasmaterial abgespalte Gase oder sonstige Gaseinschlüsse von innen nach außen weitgehend ungehindert entweichen können.

Nach der thermischen Wärmebehandlung zum Abrunden und Glätten der Faserstirnflächen folgt als nächster Verfahrensschritt eine Abkühlphase, während der sich die abgerundeten Lichtleitfaserenden FE1, FE2 für eine vorgebbare Zeitspanne abkühlen können. Dazu wird zum Beispiel der Lichtbogen LB zwischen den beiden Elektroden EL1, EL2 für eine bestimmte, vorgebbare Zeitdauer ausgeschaltet. Gegebenenfalls kann es auch bereits ausreichend sein, die Stromstärke IS des zwischen den beiden Elektroden EL1, EL2 fließenden Glimmentladungsstroms und damit die Temperatur des Lichtbogens LB entsprechend gegenüber der Lichtbogentemperatur beim Abrundungsvorgang zu verringern. Während der Abkühlphase werden die Lichtleitfaserenden zweckmäßigerweise auf eine Abkühltemperatur gebracht, die zumindest unterhalb der Schmelztemperatur ihres Glasmaterials liegt. Während die Lichtleitfaserenden beim Abrunden auf eine Temperatur von etwa 1500° C erwärmt werden, weisen sie nach der Abkühlungsphase zweckmäßigerweise höchstens noch eine Temperatur von etwa 1000° C auf. Insbesondere wird solange gewartet, bis sich die Faserenden nach ihrem thermischen Abrundungsvorgang wieder etwa bis auf Raumtemperatur abgekühlt haben.

Gegebenenfalls kann es zweckmäßig sein, den Abrundungsvorgang und Positioniervorgang zu vertauschen, d.h. zuerst die beiden Faserenden abzurunden und dann erst nachfolgend zu in gewünschter Weise zu positionieren.

Weiterhin ist es selbstverständlich auch möglich, jedes Faserende einzeln, d.h. separat durch Wärmebehandlung abzurunden und zu glätten und nicht wie in der Figur 3 gemeisam. Dazu wird z.B. zunächst nur das erste Faserende FE1 in die Hitzezone des Lichtbogens LB von Figur 3 hineingebracht. Nach seiner Abrundung wird es wieder aus dem Lichtbogen herausgenommen und der Abrundungsvorgang separat für das zweite, zughörige Faserende FE2 wiederholt.

Während und/oder nach diesem Abkühlungsvorgang werden die Faserenden FE1, FE2 in z-Richtung zweckmäßigerweise weiter aufeinander zubewegt, bis ein gewünschter Längsabstand zwischen den beiden Faserstirnflächen GF1, GF2 zur nachfolgenden Durchführung des eigentlichen Schweißvorganges eingestellt ist. In der Figur 4 ist dieses Zusammenfahren der Faserenden FE1, FE2 mit Hilfe von Pfeilen z1, z2 in z-Richtung angedeutet. Es verbleibt ein Spaltraum zwischen den abgerundeten, sich noch nicht kontaktierenden Faserstirnflächen GF1, GF2, der gegenüber dem Spaltraum beim Abrundungsvorgang von Figur 3 verkleinert ist. Vor dem Beginn des eigentlichen Schweißvorganges zum Verschmelzen der beiden Lichtleitfasern wird zwischen deren Stirnflächen ein Längsabstand vorzugsweise zwischen 3 und 12 μm eingestellt.

Anschließend wird der Lichtbogen LB erneut gezündet, um die Lichtleitfaserenden vorzuwärmen, das heißt insbesondere auf Erweichungs- bzw. Schmelztemperatur zu bringen. Dies veranschaulicht Figur 5. Während die zuvor abgerundeten und dann abgekühlten Faserenden FE1, FE2 erneut erwärmt und stirnseitig angeschmolzen werden (= Vorschweißen), werden sie jetzt soweit aufeinander zubewegt, daß sie sich schließlich entsprechend Figur 6 stirnseitig kontaktieren. Dieses Aufeinanderzufahren bis zur Kontaktierung ist in der Figur 5 durch aufeinander zugerichtete Bewegungspfeile z1*, z2* in z-Richtung veranschaulicht. Figur 6 zeigt den Bereich um die Schweißverbindungsstelle SS der beiden Faserenden FE1, FE2 unmittelbar bei deren stirnseitiger Kontaktierung. An der strichpunktiert angedeuteten Schweißverbindungs- bzw. Stoßstelle SS kommt es zunächst lediglich im Zentral- bzw. Mittenbereich zu einer Verschmelzung des erweichten, zänflüssig gemachten Glasmaterials der abgerundeten Stirnseiten der beiden Lichtleitfaserenden FE1, FE2, so daß diese lediglich dort aneinanderhaften. Denn durch die Krümmung bzw. Rundung der Faserstirnflächen steht deren Zentralbereich jeweils am weitesten vor, so daß es dort zu einer ersten Kontaktierung kommt. Im Außenbereich hingegen verbleibt zunächst eine um den Außenumfang verlaufende, ringförmige Nut im Mantelglas, d.h. es verbleibt zunächst zwischen den sich lediglich im Zentralbereich kontaktierenden Faserstirnflächen GF1, GF2 durch die Abrundung der Abbruchkanten eine Randkluft bzw. ein Randspalt RK (siehe Figur 6) nach außen offen. Durch diese Randkluft RK können beim Verschweißen etwaig aus dem Glasmaterial abgespalte Gase oder sonstige Gaseinschlüsse von innen nach außen weitgehend ungehindert entweichen. Beim weiteren Aufeinanderzubewegen der Faserenden FE1, FE2 schließt sich schließlich langsam diese Randkluft RK, was in der Figur 7 dargestellt ist. Da die beiden Lichtleitfasern FE1, FE2 über die strichpunktiert eingezeichnete Soll-Stoßstelle SS hinaus, das heißt mit leichtem Faserüberhub ineinandergefahren werden, während der Kontaktierungsbereich weiterhin der Hitzeenergie des Lichtbogens LB ausgesetzt bleibt (= Hauptschweißen), verschmilzt das Mantelglas der ersten Lichtleitfaser FE1 mit dem Mantelglas der Lichtleitfaser FE2. Durch die Oberflächenspannung des geschmolzenen Glasmaterials der beiden Lichtleitfasern fließt dabei das zähflüssig gemachte Glasmaterial in diejenigen Bereiche, wo am Außenumfang bei der Kontaktierungsstelle SS ein Materialdefizit vorliegt. Dadurch verschwindet die in der Figur 7 noch sichtbare ringförmige Nut RK* am Außenumfang der Schweißverbindungsstelle. Auf diese Weise wird die Außenkontur im Bereich der Schweißverbindungsstelle SS der beiden miteinander verschmolzenen Faserenden FE1, FE2 geglättet, das heißt die beiden miteinander verschmolzenen Lichtleitfasern FE1, FE2 weisen über ihren Schweißbereich hinweg in etwa dieselbe Außenkontur, insbesondere im wesentlichen denselben Außendurchmesser wie entlang ihrer sonstigen Längserstreckung auf. Figur 8 zeigt die fertige Schweißverbindung SS zwischen den beiden Lichtleitfasern FE1, FE2. Die beiden miteinander verspleißten Faserenden FE1, FE2 weisen jetzt auch über ihre Schweißstelle SS hinweg (in Faserlängsrichtung betrachtet) eine im wesentlichen kreiszylinderförmige Form auf.

Zusammenfassend betrachtet ist insbesondere folgende zeitliche Abfolge von Verfahrensschritten zweckmäßig, um eine einwandfreie thermische Verschweißung mindestens je zwei einander zugeordneter Lichtleitfaserenden erreichen zu können:

a) Faservorpräparation (= Entcoaten der jeweiligen Lichtleitfaser sowie Abtrennen eines Faserendabschnitts zur Erzielung von 90° - Bruchflächen)

b) Positionierung der miteinander zu verbindenden Faserenden.

c) Stirnseitiges Abrunden des jeweiligen Lichtleitfasrendes durch thermische Erhitzung bzw. Wärmebehandlung.

d) Abkühlen der abgerundeten Lichtleitfaserenden für eine vorgebbare Zeitdauer.

e) konventionelles Fusionsverschweißen.

Das Fusionsverschweißen kann dabei insbesondere folgendermaßen durchgeführt werden:

Die je zwei einander zugeordneten, abgerundeten und dann abgekühlten Lichtleitfasern werden in einem vorgebbaren Längsabstand voneinander positioniert und/oder fluchtend aufeinander ausgerichtet. Während die Lichtleitfaserenden fortlaufend z.B. einem Glimmentladungs-Lichtbogen ausgesetzt und dadurch stirnseitig angeschmolzen werden (= Vorschweißen), werden sie zur Kontaktierung unter Vorschub zusammengefahren und/oder ihr stirnseitig aufgeschmolzenes Glasmaterial mit Faserüberhub gar ineinandergefahren. Die derart miteinander schmelzverklebten Faserenden werden durch weitere Erwärmung (=Hauptschweißen) mit Hilfe des Glimmentladungs-Lichtbogens schließlich so thermisch verschweißt, daß sich eine dauerhafte, zugfeste Spleißverbindung ergibt.

Ggf. kann dabei das Vorschweißen auch entfallen. Die Verfahrensschritte b) und c) können ggf. vertauscht werden. Weiterhin kann es zweckmäßig sein, das „Vorschweißen" wegzulassen, so daß der Zeitraum beim Zusammenfahren der Lichtleitfasern zu deren Abkühlung nach dem Abrundvorgang genutzt werden kann.

Dadurch, daß nach dem Abrunden der Lichtleitfaserenden mittels thermischer Erhitzung eine Abkühlphase für eine vorgebbare Zeitspanne folgt, kann der Abrundungsvorgang weitgehend unabhängig vom eigentlichen Schweißvorgang gemacht und durchgeführt werden. Durch diese zeitliche Trennung, das heißt Abkopplung des Abrundungsvorgangs vom eigentlichen Schweißvorgang, lassen sich sowohl zum Abrunden als auch zum Schweißen optimale Schweißparameter wie zum Beispiel Schweißtemperatur und Einwirkungszeit einstellen. Durch die zusätzlich eingeschobene Abkühlphase nach dem Abrunden der Lichtleitfaserenden sind dabei Überhitzungen der Lichtleitfaserenden bei deren nachfolgender, eigentlicher Verschweißung weitgehend vermieden.

Das Abwarten, bis sich die Faserenden nach ihrem Abrundungsvorgang wieder ausreichend abgekühlt haben, ist besonders bevorzugt beim Verschweißen von Mehrmodenfasern von Bedeutung. Durch die Abkühlung solcher Mehrmodenfaserenden nach deren thermischer Abrundung kann nämlich beim Hauptschweißen, d.h. eigentlichen Verschmelzen des Glasmaterials der Faserenden, eine Überhitzung und damit die Ausbildung von Gasblasen in deren aufgeschmolzenen Glasmaterial weitgehend vermieden werden. Durch die zusätzlich eingeschobene Abkühlungsphase zwischen dem Abrundungsvorgang und dem eigentlichen Verschweißen der Lichtleitfaserenden wird insbesondere vermieden, daß die auf den jeweiligen, dotierten Lichtleitfaserkern einwirkende Hitzeenergie zu groß wird und es durch Überhitzung zur Aufblähung einer oder mehrerer Gasblasen kommt.

Demgegenüber zeigt Figur 9 in schematischer sowie vergrößerter Darstellung eine mißlungene Schweißverbindung durch Gasblasenbildung im Bereich der Stoßstelle der beiden Lichtleitfasern FE1, FE2, wenn diese in konventioneller Weise, das heißt ohne Abrundungsvorgang und ohne Abkühlungsphase miteinander verschweißt werden. Dadurch besteht die Gefahr, daß es im Bereich der Stoßstelle SS(, die in der Figur 9 strichpunktiert senkrecht zur Längserstreckung der Lichtleitfaserenden FE1, FE2 eingezeichnet ist,) beim Verschmelzen der Faserstirnflächen zur Ausbildung ein oder mehrerer Gasblasen kommt. Eine sich aufblähende Gasblase beim Verschmelzen der Lichtleitfaserenden führt zähflüssig gemachtes Glasmaterial radial nach außen, so daß sich im Bereich der Stoßstelle SS am Außenumfang der sich kontaktierenden Faserenden FE1, FE2 Material anhäuft. Diese unförmige, radial nach außen abstehende Ansammlung von Glasmaterial ist in der Figur 9 mit GB bezeichnet. Sie stellt eine Inhomogenitätsstelle im Längsverlauf der miteinander verschweißten Lichtleitfasern FE1, FE2 dar und führt zu einer nicht tolerierbaren Spleißdämpfung.

Solche mißlungene Spleiße durch Blasenbildung ergeben sich insbesondere bei der Verschweißung von Mehrmodenfasern, die eine hohe Dotierung des Faserkerns und einen großen Kerndurchmesser aufweisen. Bilden sich beim Verschweißen nach dem Kontaktieren der Enden je zweier einander zugeordneter Mehrmodenfasern Gasblasen im Bereich der Spleißstelle aus, was eine völlig unbrauchbaren Spleiß zur Folge hat, so erfordert dies eine erneute Vorbereitung der Faserenden und einen erneuten Schweißvorgang, das heißt einen erheblichen Zusatzaufwand.

Zusammenfassend betrachtet kann hingegen beim erfindungsgemäßen Verfahren durch die Verrundung der Faserenden und durch Einhaltung einer Abkühlphase nach dem Abrundungsvorgang die Ausbildung von Gasblasen weitgehend vermieden werden. Durch das Einführen einer Abkühlphase kann das Verrunden getrennt, das heißt unabhängig vom eigentlichen Verschweißen durchgeführt werden. Auf diese Weise ist es ermöglicht, sowohl das Verrunden als auch das Verschweißen jeweils in optimaler Weise, das heißt ohne Rücksicht auf den anderen Verfahrensschritt auszuführen. Dies erlaubt die Einstellung jeweils optimaler Verfahrensparameter wie zum Beispiel Entladestromstärke und Entladestromzeit. Zu diesem Zweck wird in zeitlichem Abstand vor dem Vorschweißen der Lichtbogen für eine vorgebbare Zeitdauer gezündet, bis die Faserenden ausreichend verrundet sind. Dabei können die Faserenden je nach Bedarf entweder auf dem üblichen, zum Schweißen erforderlichen Längsabstand oder auf einen anderen Längsabstand (vergleiche Figur 3) eingestellt werden. Anschließend wird der Lichtbogen ausgeschaltet, so daß sich die Faserenden wieder abkühlen können. Anstelle den Lichtbogen ganz auszuschalten, kann gegebenenfalls auch lediglich die Lichtbogentemperatur entsprechend verringert werden. Dann wird, wie bei den konventionellen Schweißverfahren, das Vorschweißen, der Voschub und das Hauptschweißen ausgeführt. Durch diese Trennung des Verrundungsvorgangs vom eigentlichen Schweißvorgang mittels der zusätzlich eingefügten Abkühlungsphase kann der Verrundungsgrad der Faserenden unabhängig vom Vorschweißvorgang und dem Hauptschweißen optimal gewählt werden. Beim Vorschweißvorgang ist es nicht erforderlich, Rücksicht auf den erforderlichen Verrundungsgrad zu nehmen. Vielmehr können die Vorschweißparameter, das heißt insbesondere Entladestromstärke sowie Entladestromzeit des Lichtbogens so gewählt werden, wie es für den Schweißprozeß optimal ist. Auf diese Weise lassen sich insbesondere für Mehrmodenfasern Schweißverbindungen mit sehr geringen Spleißdämpfungen herstellen. Solche Spleißverbindungen für mehr Mehrmodenfasern weisen eine Spleißdämpfung vorzugsweise von höchstens 0,1 dB, bevorzugt zwischen 0 und 0,03 dB auf.

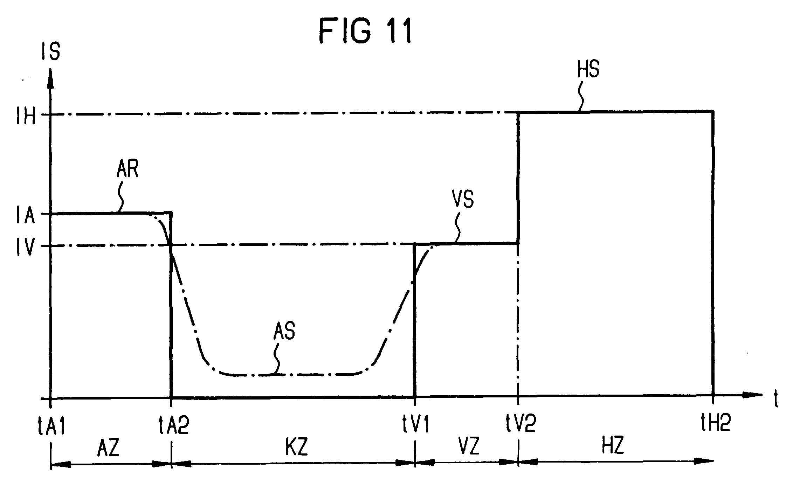

Figur 11 zeigt in schematischer Darstellung ein Schweißstrom-/Zeit-Diagramm IS/t zur Steuerung des Glimmentladungs-Lichtbogens der Schweißvorrichtung SV nach Figur 1 mit Hilfe deren Steuervorrichtung COM. Die Schweißzeitkurve AR ist dem Abrundungsvorgang für die Faserenden FE1, FE2 gemäß Figur 3 zugeordnet. Zum Zeitpunkt tA1 wird dabei der Lichtbogen LB gezündet, wobei die Schweißstromstärke IS steil, insbesondere treppensprungartig, bis auf den Wert IA ansteigt und dort im wesentlichen konstant bis zum Zeitpunkt tA2 verbleibt. Zu diesem Zeitpunkt wird der Lichtbogen LB von Figur 3 ausgeschaltet, das heißt der Abrundungsvorgang beendet. Die Zeitdauer AZ = tA2 - tA1 für den Abrundungsvorgang wird vorzugsweise zwischen 10 msec und 1 sec, insbesondere zwischen 200 und 800 msec gewählt. Während des Ahrundens der Faserenden wird für die Spleißstromstärke IS ein Wert IA von mindestens 10 mA, insbesondere zwischen 12 und 20 mA eingestellt.

Nach dem Abrundungsvorgang während der Zeitdauer AZ folgt für die Zeitdauer KZ eine Abkühlungsphase für die erwärmten Faserenden. Während dieser Abkühlungsphase ist der Lichtbogen vorzugsweise ausgeschaltet, so daß die Schweißstromstärke IS gleich Null ist. Die Wartezeit KZ zur ausreichenden Abkühlung der Faserenden wird zweckmäßigerweise mindestens gleich 0,1 sec, insbesondere zwischen 0,1 und 2 sec, bevorzugt um etwa 1,0 sec, gewählt. Um eine Überhitzung der Faserenden beim eigentlichen Verschweißungsvorgang zu vermeiden, kann es gegebenenfalls auch bereits ausreichend sein, nach dem Abrundungsvorgang die Schweißstromstärke IS gegenüber ihrem Wert IA beim Abrundungsvorgang entsprechend zu reduzieren. In der Figur 11 ist diese Absenkung der Schweißstromstärke strichpunktiert eingezeichnet und mit AS bezeichnet. Für eine ausreichende Abkühlung wird die Entladestromstärke IS zweckmäßigerweise auf unter 13 mA, insbesondere auf einen Wert zwischen 6 und 12 mA reduziert.

Sind die Faserenden ausreichend abgekühlt, so wird zum Zeitpunkt tV1 schließlich mit dem eigentlichen Schweißvorgang begonnen. Dieser setzt sich aus dem sogenannten Vorschweißen und dem nachfolgenden Hauptschweißen zusammen. Während des Vorschweißvorgangs (siehe Figur 5) stehen sich zunächst noch die beiden Faserenden in einem definierten Längsabstand gegenüber. Während sie aufeinander zugefahren werden, werden sie auf Erweichunstemperatur vorerwärmt. Dazu steigt die Schweißstromstärke IS vorzugsweise sprungartig auf den Vorschweißstromwert IV an und verbleibt dort annäherungsweise konstant bis zum Zeitpunkt tV2. Die Schweißkurve für dieses Vorerwärmen, d.h. Vorschweißen der Faserenden ist in der Figur 11 mit VS bezeichnet. Der Vorschweißstromwert IV wird insbesondere mindestens gleich 12 mA, bevorzugt zwischen 12,5 und 16 mA gewählt. Die Zeitdauer für das Vorschweißen wird zweckmäßigerweise mindestens gleich 100 msec, insbesondere zwischen 200 und 1000 msec eingestellt. Stoßen schließlich die erweichten Faserenden zum Zeitpunkt tV2 aneinander, so wird die Schweißstromstärke IS weiter, insbesondere treppensprungförmig bis auf den Wert IH erhöht, wobei IH>IV ist. Vorzugsweise werden dabei die aneinanderhaftenden Faserenden mit leichtem Faserüberhub ineinandergefahren und ihre Glasmäntel miteinander verschmolzen. Die Schweißkurve für dieses eigentliche Verschmelzen der Faserenden (= Hauptschweißen) ist, in der Figur 11 mit HS bezeichnet. Das Hauptschweißen wird schließlich zum Zeitpunkt tH2 beendet, das heißt zu diesem Zeitpunkt der Lichtbogen annähernd konstanter Schweißstromstärke IH ausgeschaltet. Für das eigentliche Hauptschweißen, das heißt das Verschmelzen der Faserstirnflächen nach deren Kontaktierung, wird vorzugsweise ein Schweißstrom IS von mindestens 12 mA, insbesondere zwischen 12,5 und 16 mA verwendet. Die Schweißzeitdauer für die Herstellen einer weitgehend homogenen Verbindung mit glatter Außenkontur wird vorzugsweise mindestens gleich 500 msec, insbesondere zwischen 1 und 10 sec gewählt.

Das erfindungsgemäße Verfahren läßt sich in entsprechender Weise auch zur Verschweißung von zwei Gruppen mit jeweils mehreren Lichtwellenleitern, insbesondere von zwei Lichtwellenleiter- Bändchen, vorteilhaft durchführen („Mehrfasertechnik").

## Patentansprüche

1.  Verfahren zum thermischen Verschweißen von mindestens je zwei einander zugeordneter Lichtleitfaserenden (FE1, FE2),
    **dadurch gekennzeichnet,**

    daß die jeweiligen beiden Lichtleitfaserenden (FE1, FE2) in vorgebbarem Längsabstand (LA) voneinander positioniert werden,
    daß diese Lichtleitfaserenden (FE1, FE2) jeweils stirnseitig durch thermische Erhitzung abgerundet werden,
    daß nach diesem Abrundungsvorgang die abgerundeten Lichtleitfaserenden (FE1, FE2) jeweils für eine vorgebbare Zeitspanne (KZ) abgekühlt werden, und daß erst danach in einem separaten Arbeitsschritt die abgekühlten Lichtleitfaserenden (FE1, FE2) stirnseitig miteinander in Kontakt gebracht und thermisch verschweißt werden.

2.  Verfahren nach Anspruch 1,
    **dadurch gekennzeichnet,**

    daß als Lichtleitfasern (FE1, FE2) Mehrmodenfasern verwendet werden.

3.  Verfahren nach einem der vorhergehenden Ansprüche,
    **dadurch gekennzeichnet,**

    daß die thermische Erhitzung jeweils durch einen Glimmentladungs-Lichtbogen (LB) bewirkt wird.

4.  Verfahren nach Anspruch 3,
    **dadurch gekennzeichnet,**

    daß der Lichtbogen (LB) nach dem Abrundungsvorgang für eine vorgebbare Zeitspanne (KZ) ausgeschaltet wird, während der sich die Lichtleitfaserenden (FE1, FE2) abkühlen können.

5.  Verfahren nach Anspruch 3,
    **dadurch gekennzeichnet,**

    daß die Temperatur des Lichtbogens (LB) nach dem Abrundungsvorgang für eine vorgebbare Zeitspanne (KZ) erniedrigt wird, während der sich die Lichtleitfaserenden (FE1, FE2) abkühlen können.

6.  Verfahren nach einem der vorhergehenden Ansprüche,
    **dadurch gekennzeichnet,**

    daß die Lichtleitfaserenden (FE1, FE2) nach dem Abrundungsvorgang zumindest auf eine Temperatur unterhalb der Schmelztemperatur ihres Glasmaterials abgekühlt werden.

7.  Verfahren nach einem der vorhergehenden Ansprüche,
    **dadurch gekennzeichnet,**

    daß die Zeitspanne (KZ) zur Abkühlung der Lichtleitfaserenden (FE1, FE2) mindestens gleich 0,1 sec, insbesondere zwischen 0,1 und 2 sec, bevorzugt um etwa 0,5 sec, gewählt wird.

8. Verfahren nach einem der vorhergehenden Ansprüche,
   **dadurch gekennzeichnet,**

   daß für die jweiligen beiden, einander zugeordneten Lichtleitfaserenden (FE1, FE2) beim Abrundungsvorgang ein Längsabstand (LA) zwischen 3 μm und 1 mm gewählt wird.

9. Verfahren nach einem der vorhergehenden Ansprüche,
   **dadurch gekennzeichnet,**

   daß jeweils die beiden einander zugeordneten Lichtleitfaserenden (FE1, FE2) vor dem Abrundungsvorgang fluchtend aufeinander ausgerichtet werden.

10. Verfahren nach einem der Ansprüche 1 mit 8,
    **dadurch gekennzeichnet,**

    daß jeweils die beiden einander zugeordneten Lichtleitfaserenden (FE1, FE2) nach dem Abrundungsvorgang fluchtend aufeinander ausgerichtet werden.

11. Vorrichtung zum thermischen Verschweißen von mindestens je zwei einander zugeordneter Lichtleitfaserenden (FE1, FE2), insbesondere nach einem der vorhergehenden Ansprüche,
    **dadurch gekennzeichnet,**

    daß Positioniermittel (HV1, HV2, SG2) vorgesehen sind, mit denen sich die Lichtleitfaserenden (FE1, FE2) in vorgebbarem Längsabstand (LA) voneinander positionieren lassen, und daß Schweißmittel (EL1, EL2) mit einer zugehörigen Steuereinrichtung (COM) derart vorgesehen sind, daß sich die Lichtleitfaserenden (FE1, FE2) stirnseitig durch thermische Erhitzung abrunden, danach für eine vorgebbare Zeitspanne (KZ) abkühlen und erst nach dieser Abkühlung in einem separaten Arbeitsschritt stirnseitig miteinander in Kontakt bringen sowie thermisch verschweißen lassen.

12. Vorrichtung nach Anspruch 11,
    **gekennzeichnet durch**

    den Einbau in einem Lichtwellenleiter-Spleißgerät.

**FIG 1**

EP 0 853 246 A2

FIG 2

MA1  EC1  ZR  EC2  KE2

KE1  Δx  Δz

FE1  SF2  SF1  LA  MA2  FE2

FIG 3

EL1  LB  GF2  R2  R1  RZ1  RZ2  FE1  FE2  EL2  GF1  LA

FIG 4

R1  R2  z1  z2  FE1  GF2  GF1  FE2

**FIG 5**

**FIG 6**

**FIG 7**

## FIG 8

SS

FE1          GL          FE2

## FIG 9

SS

FE1          GB          FE2

## FIG 10

UF2

FE1*          UF1          FE2*

# FIG 11

EP 0 853 246 A2